Europäisches Patentamt

**European Patent Office**

Office européen des brevets

(11) Publication number: **0 343 116**
A2

# EUROPEAN PATENT APPLICATION

(21) Application number: **89830084.3**

(22) Date of filing: **28.02.89**

(51) Int. Cl.⁴: **B 60 T 8/50**
**B 60 T 8/34**

(30) Priority: **02.03.88 IT 6716688**

(43) Date of publication of application:
**23.11.89 Bulletin 89/47**

(84) Designated Contracting States:
**AT BE DE ES FR GB IT NL SE**

(71) Applicant: **INDUSTRIE MAGNETI MARELLI S.r.l.**
**Via Adriano 81**
**I-20128 Milano (IT)**

(72) Inventor: **Saini, Alberto**
**Via Garibaldi, 10**
**I-20046 Biassono (Milano) (IT)**

**Podesta', Maria Grazia**
**Via Rossi, 15**
**I-29100 Piacenza (IT)**

(74) Representative: **Quinterno, Giuseppe et al**
**c/o Jacobacci-Casetta & Perani S.p.A. Via Alfieri, 17**
**I-10121 Torino (IT)**

(54) **Discharge valve and a braking system including the valve.**

(57) The valve comprises a body (1-3) with a first opening (7) for selective connection to a pressure source or to the discharge, and a second opening (10) for connection to a user device such as, for example, a braking cylinder. Valve devices (5, 13, 22, 27) are provided in the body (1-3) for enabling the flow of the hydraulic fluid from the first opening (7) to the second opening (10) when the former is connected to a pressure source, and the controlled flow of the fluid from the second opening (10) to the first opening (7) when the latter is connected to the discharge.

The valve devices are arranged in particular to enable the reduced flow of the fluid between the second opening (10) and the first opening (7) as long as the pressure at the second opening (10) exceeds a predetermined value, and then a relatively quicker flow when the pressure at the second opening (10) is less than that value.

FIG. 2

Bundesdruckerei Berlin

EP 0 343 116 A2

**Description**

## Discharge valve and a braking system including the valve

The present invention relates to a discharge valve, particularly for hydraulic anti-skid braking systems for motor vehicles.

More specifically, the subject of the invention is a discharge valve of the type which comprises a body with a first opening and a second opening, the first being intended for selective connection to a pressure source or to the discharge and the second to at least one user device, such as a braking cylinder, valve means being provided in the body for enabling the flow of hydraulic fluid from the first opening to the second opening when a pressure source is connected to the first opening, and the controlled flow of the fluid from the second opening to the first opening when the first opening is connected to the discharge.

The discharge valve according to the invention is characterised in that the valve means are arranged to enable the reduced flow of the fluid between the second opening and the first opening as long as the pressure at the second opening exceeds a predetermined value, and a relatively quicker flow when the pressure at the second opening is less than that value.

The valve according to the invention may conveniently be applied to an anti-skid braking system for a motor vehicle, in which the speed and/or acceleration (or rather the deceleration) of at least one wheel is detected and monitored and in which the pressure supplied to the braking cylinder of the at least one wheel is reduced when that wheel tends to become locked in conditions of reduced road-holding. In some anti-skid braking systems of this type produced up to now, the reduction of the braking pressure applied to the wheel which is becoming locked takes place extremely abruptly, the braking cylinder of that wheel being disconnected from the pressure supply and connected to the discharge. When this takes place, the pressure in the braking cylinders concerned falls to zero almost instantaneously.

This mode of operation is quite correct when the wheel or wheels concerned continued to remain under poor road-holding conditions. If, on the other hand, the road-holding conditions of the wheels concerned improve immediately after the start of the reduction of the pressure in the braking cylinders, it would be convenient if the pressure in the braking cylinders were not completely discharged, so that the braking action could be resumed more rapidly and effectively, with a consequent considerable reduction in the braking distance.

In other systems, the electronic control unit is programmed to control the discharge of pressure from the braking cylinders of the locked wheels so that it takes place gradually. This type of solution involves the need to provide the electronic control unit with rather complex and expensive hardware and software.

The discharge valve according to the invention can conveniently be used in an anti-skid braking system of the above-mentioned type for the supply therethrough of the braking pressure to the braking elements of the wheels which are being controlled, and for enabling the pressure to be reduced when the wheels under control are tending to lock. With the valve according to the invention, the pressure is discharged slowly during a first stage and then more quickly during a second stage. Hence, if the road-holding conditions improve during the first stage of the pressure discharge, it is possible to reapply the brakes starting from a non-zero pressure valve, so as to enable the favourable reduction of the braking distance necessary.

Therefore, anti-skid braking systems in which valves according to the invention are used are also included within the scope of the invention.

Further characteristics and advantages of the present invention will become clear from the detailed description which follows with reference to the appended drawings, provided by way of non-limiting example, in which:

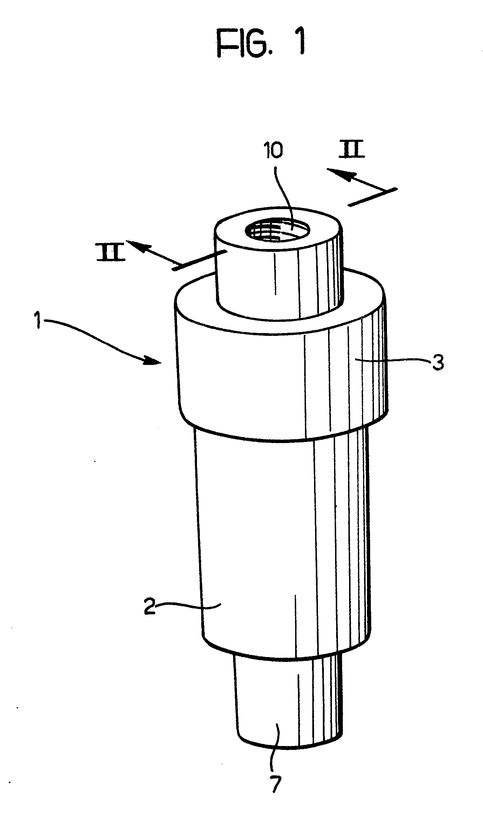

Figure 1 is a perspective view of a discharge valve according to the invention,

Figure 2 is an axial section taken on the line II-II of Figure 1,

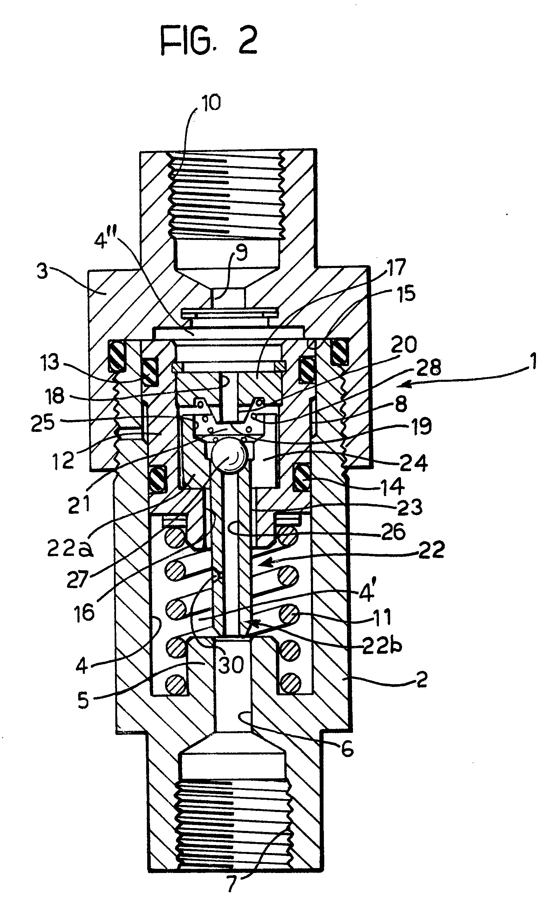

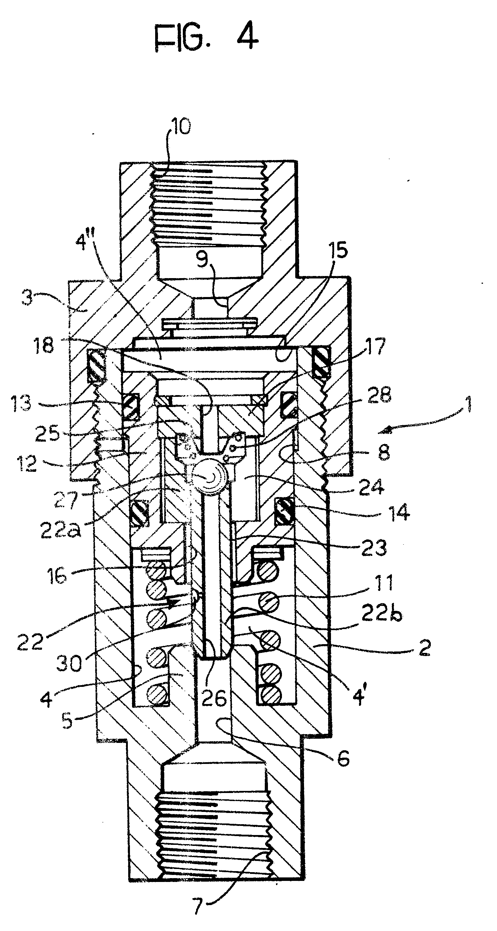

Figures 2 and 4 are similar axial sections which show the valve in another two operating conditions.

With reference to the drawings, a discharge valve according to the invention includes a body 1 which, in the embodiment illustrated, is constituted by two substantially cup-shaped elements 2, 3, for example of metal, connected together with a threaded coupling. A cylindrical chamber 4 is defined between these elements.

An annular projection 5 extends into the chamber 4 centrally from the base wall of the element 2 and defines an axial passage 6 which can establish communication between the chamber 4 and a connector 7 integral with the element 2.

The wall of the body 2 which defines the chamber 4 has a larger diameter in the portion facing the element 3. The transition between the two different internal diameters of the element 2 takes place in correspondence with a zone indicated 8.

In its top wall, the element 3 has an opening 9 which communicates with a connector 10.

A helical spring 11 is arranged in the chamber 4, around the tubular projection 5 of the element 2, and a piston 12 is situated thereon and is sealingly movable in the chamber. The piston is substantially cup-shaped and has two outside diameters, above and below the transition zone 8 of the wall of the element 2 respectively. The piston 12 is provided with two corresponding sealing rings, indicated 13 and 14, above and below the transition.

The spring 11 thrusts the piston 12 towards the position illustrated in Figure 2, in which the piston pushes against a stop shoulder 15 of the top wall of the element 3.

The piston 12 has a coaxial opening 16 in its base wall.

A substantially disc-shaped element, indicated 17, is fixed transversely within the piston 12, facing and spaced from its base wall. This element has a central opening 18. A ring 19 extends around the opening in the lower face of the element 17 and has a plurality of radial slits 20 (Figure 2).

A chamber 21 is defined within the piston between the element 17 and the base wall of the piston 12, and a head portion 22a of an obturator member 22 is mounted for axial sliding therein, with a slight axial clearance. This obturator member has a tubular extension 22b which extends into the chamber 4 towards the projection 5 of element 2, passing with radial clearance through the opening 16 in the piston with which it defines an annular passage, indicated 23. The end of the tubular portion 22a of the obturator member 22 has a frusto-conical taper and can mate with the inner edge of the projection 5 to constitute, in cooperation therewith, a valve which can control communication between the chamber 4 and the opening 6, as can be seen from a comparison of Figures 2, 3 and 4.

The head 22a of the obturator member 22 has at least one radial slit, indicated 24 in the drawings. Moreover, a recess 25 is formed in the head on the side facing the connector 10 and communicates with the passage 26 defined within the tubular portion 22b. A ball 27 is positioned in this recess. A spring 28 reacts at one end against the element 17 and thrusts the ball 27 into the position illustrated in Figure 2, in which the ball occludes the passage 26.

The portion of the chamber which is situated below the piston 12 has been indicated 4'. The portion of this chamber which is situated above the piston 12, however, has been indicated 4".

The portions 4' and 4" of the chamber 4 are in permanent communication with each other through the annular passage 23, the slit 24 in the head of the obturator element 22, the slits 20 of the ring 19, and the passage 18 formed in the element 17, whatever the position assumed by the obturator ball 27 and by the obturator member 22.

A small calibrated hole, indicated 30, is formed in the wall of the tubular portion 22b of the obturator 22.

In use in a hydraulic braking system, particularly of the anti-skid type, the connector 7 is intended to be connected to a tube which is selectively connectible to a pressure source or to the discharge. The connector 10, however, is intended to be connected to one or more braking cylinders.

In the rest condition, the discharge valve according to the invention assumes the configuration shown in Figure 2: the piston 12 is in its uppermost position by virtue of the spring 11, the obturator element 22 is in the position illustrated, in which its lower end is spaced from the inner edge of the projection 5, and the ball 27 occludes the passage 26 under the action of the spring 28.

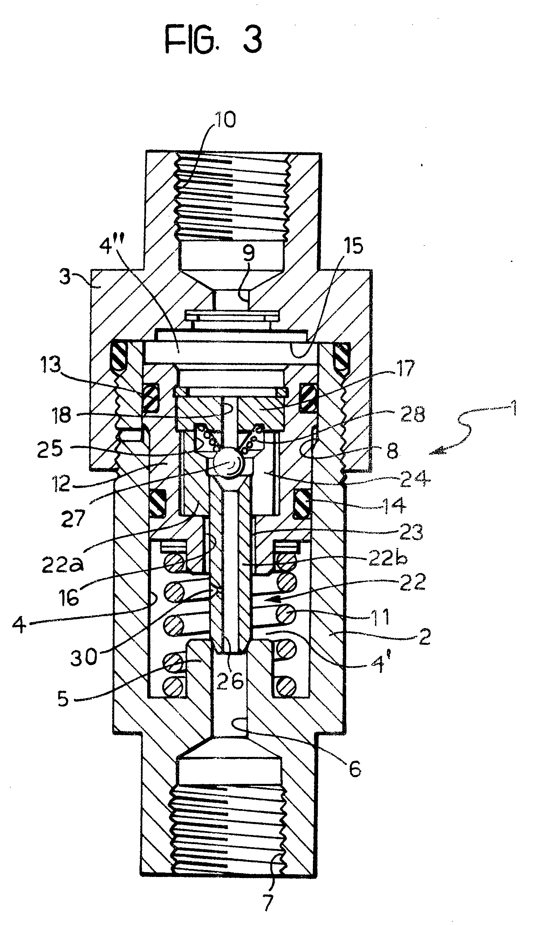

If, under these conditions, pressurised fluid is supplied to the connector 7, this fluid reaches the connector 10 and thence the braking cylinders connected thereto. As the pressure supplied to the connector 10 increases, the force exerted on the upper face of the piston 12 increases. Since the diameter of the upper portion of the piston 12 is greater than the diameter of its lower portion, the piston is then gradually thrust downwards, compressing the spring 11. As it descends, the piston 12 draws the obturator element 22 with it until, as shown in Figure 3, the lower end of the latter disconnects the opening 6 from the chamber 4'. Under these conditions, the fluid supplied through the inlet connector 7 enters the passage 26 within the obturator element and raises the ball 27 from its seat against the action of the spring 28. The pressurised fluid supplied through the connector 7 can thus continue to reach the braking cylinders, passing through the passage 26, the recess 25 in the head of the obturator element 22, the passage 18, the chamber 4", and the opening 9.

If the connector 7 is then disconnected from the pressure supply and connected to the discharge, the ball 27 immediately closes the passage 26 under the action of the pressure in the braking cylinders connected to the connector 10 and of the spring 28. Under these conditions, shown in Figure 4, the connector 10 is connected to the connector 7 and thus to the discharge through the opening 9, the chamber 4", the passage 18 of the element 17, the slit 24 in the head of the obturator element, the annular passage 23, the calibrated hole 30, the end portion of the passage 26, and the opening 6. The calibrated passage 30 slows the discharge of the fluid from the braking elements to the discharge. This occurs as long as the pressure acting on the upper face of the differential piston 12 is sufficient to counteract the action of the spring 11, after which the piston 12 is again moved upwards, removing the obturator element 22 from the seat constituted by the inner edge of the projection 5 of the base wall of the element 2. Under these conditions, the fluid in the braking cylinders can flow towards the discharge, passing through the connector 10, the opening 9, the chamber 4", the passage 18 of element 17, the slits 20 in the ring 19, the slit 24 in the head of the obturator element 22, the annular passage 23, the chamber 4', the passage 6, and the connector 7. At this stage, the flow of the fluid is no longer slowed and can therefore take place quite quickly. Upon completion of the discharge, the valve reassumes the configuration shown in Figure 2.

Naturally, the principle of the invention remaining the same, the forms of embodiment and details of construction may be varied widely with respect to those described and illustrated purely by way of non-limiting example, without thereby departing from the scope of the present invention. Thus, for example, the calibrated hole 30 could be replaced by an (equivalent) end slit formed in the tapered end portion of the obturator member 22.

**Claims**

1. A discharge valve, particularly for anti-skid braking systems for motor vehicles, comprising a body (1-3) with first and second openings (7, 10), the first (7) being intended for selective connection to a pressure source or to the discharge, the second (10) being intended for connection to at least one user device, such as a braking cylinder; valve means (5, 13, 22, 27) being provided in the body (1-3) for enabling the flow of fluid from the first opening (7) to the second opening (10) when the first opening (7) is connected to a pressure source, and the controlled flow of the fluid from the second opening (10) to the first opening (7) when the first opening (7) is connected to the discharge, characterised in that the valve means (15, 12, 22, 27) are arranged to enable the reduced flow of the fluid between the second opening (10) and the first opening (7) as long as the pressure at the second opening (10) exceeds a predetermined value, and a relatively quicker flow when the pressure at the second opening (10) is less than that value.

2. A discharge valve according to Claim 1, in which the body (1-3) defines, between the first opening (7) and the second opening (10), a first path (7, 6, 4', 23, 24, 18, 4'', 9, 10) and a second path (7, 6, 26, 18, 4'', 9, 10) in which a first on-off valve (22b, 5) and a second on-off valve (27, 25) are provided, and a third path (10, 9, 4'', 18, 24, 23, 4', 30, 26, 6, 7) including a restriction (30); control means (11, 12) associated with the on-off valves (22b, 5; 27, 25) being provided in the body (1-3) and being arranged to enable the flow of fluid from the first opening (7) to the second opening (10) along the first or the second path, and the flow of the fluid from the second opening (10) to the first opening (7) along the third path or the second path when the pressure at the second opening (10) is greater than the predetermined value or less than that value, respectively.

3. A discharge valve according to Claim 2, in which the first on-off valve includes an obturator (22, 22b) which controls communication between the first opening (7, 6) and a chamber (4') defined in the body (1-3), the chamber (4') communicating permanently with the second opening (9, 10); the first obturator (22) defining a passage (26) which is in permanent communication with the first opening (7, 6) of the body and can communicate with the second opening (9, 10) through the second valve (17, 25); the restriction being constituted by a calibrated narrow passage (30) which is formed in the wall of the first obturator (22, 22b) and through which the chamber (4') communicates permanently with the first opening (7, 6).

4. A discharge valve according to Claim 3, in which the control means comprise a differential piston (12) movable in the chamber (4, 4', 4''), through the effect of the pressure supplied to the first opening (7, 6) of the body and against the action of resilient biasing means (11), between a rest position (Figure 2) and a working position (Figure 3) in which it keeps the obturator element (22) in the condition of opening and closing of the first valve (22b), (5) respectively;
the second valve (25, 27) comprising a seat (25) formed in the axial passage (26) of the obturator (22) of the first valve, and an obturator (27) urged against the seat by second resilient means (28) which are adapted to enable it to move away from the seat through the effect of the pressure supplied to the first opening (7, 6) of the body when the first valve (22b, 5) is closed.

5. A discharge valve according to Claim 3 and Claim 4, characterised in that the section of the piston (12) which faces the second opening (9, 10) is greater than the section which faces the first aperture (7, 6).

6. A discharge valve according to Claim 5, characterised in that a recess is defined in the piston (12) and communicates with the chamber (4') and the second opening (9, 10) of the body through first and second passages (16; 18) respectively; the obturator member (22) of the first valve (22b, 5) comprising a head portion (22a) which is situated in the recess of the piston (12) and in which the seat (25) is formed, and a tubular rod (22b) which extends into the chamber (4') and passes with clearance through the first passage (16) of the piston towards the first opening 7, 6) of the body; the obturator (27) of the second valve being arranged in the recess of the piston (12) between the seat (25) formed in the obturator (22) of the first valve and a stop (19) fast with the piston (12).

7. A braking system, particularly an anti-skid braking system for a motor vehicle in which the speed and/or the deceleration of at least one wheel is detected and monitored and in which the supply of the braking pressure to the at least one wheel and the reduction of the pressure under conditions of reduced road-holding take place through a supply and discharge valve selectively connectible to a pressure source and to the discharge, characterised in that the valve is constituted by a valve according to one or more of the preceding claims.

# FIG. 1

# FIG. 2

# FIG. 3

# FIG. 4